# EUROPEAN PATENT APPLICATION

(11) **EP 3 715 329 A1**
(43) Date of publication of application: **30.09.2020**
(21) Application number: 18878799.8
(22) Date of filing: 16.11.2018
(51) Int. Cl.: C01B 33/107, B01D 39/20

(54) **TRICHLOROSILANE MANUFACTURING APPARATUS, AND METHOD FOR MANUFACTURING TRICHLOROSILANE**

(30) Priority: 20.11.2017 JP 2017223144
(71) Applicant: Tokuyama Corporation, Shunan-shi, Yamaguchi 745-8648 (JP)
(72) Inventor: HIROTA, Kenji, Shunan-shi Yamaguchi 745-8648 (JP); OGIHARA, Katsuya, Shunan-shi Yamaguchi 745-8648 (JP)
(74) Representative: Bittner, Thomas L.
(86) International application number: PCT/JP2018/042557
(87) International publication number: WO 2019/098345

(57) **Abstract**

An object is to prevent corrosion and stress-corrosion cracking that would be caused by hydrochloric acid which would be formed at or near a filter element (80). A trichlorosilane production apparatus (1) includes: a reactor (2) configured to produce trichlorosilane; and a filter device (3) configured to remove a reaction residue, the filter device (3) including a filter element that is comprised of a corrosion-resistant material.

## Description

### Technical Field

The present invention relates to a trichlorosilane production apparatus and a method of producing trichlorosilane.

### Background Art

Highly pure trichlorosilane (TCS, SiHCl₃) is used to produce polycrystalline silicon which is used as materials for semiconductors and solar cells. Trichlorosilane is obtained through, for example, the following reaction pathway. First, metal silicon powder (Si) and hydrogen chloride (HCI) are reacted with each other. By so doing, trichlorosilane is produced as a result of a main reaction shown by Formula (1), whereas tetrachlorosilane (STC, SiCl₄) is produced as a result of a side reaction shown by Formula (2). Tetrachlorosilane is recovered and then reused, so that the tetrachlorosilane is converted into trichlorosilane as shown by Formula (3). Alternatively, in some cases, trichlorosilane is produced through a reaction shown by Formula (3) without use of hydrogen chloride.

Si + 3HCl -> SiHCl₃ + H₂ (1)

Si + 4HCl -> SiCl₄ + 2H₂ (2)

3SiCl₄ + 2H₂ + Si -> 4SiHCl₃ (3)

The reaction product collected from a reactor (in which the above reactions take place) contains chlorosilane compounds, such as trichlorosilane, low-boiling silane, and tetrachlorosilane. Therefore, in order to obtain a high-purity trichlorosilane gas, it is necessary to purify the reaction product. However, the reaction product also contains unreacted metal silicon powder. Therefore, if the reaction product as-is is supplied to a downstream purifier from the reactor, the purifier may undergo erosion and become clogged with the metal silicon powder. The unreacted metal silicon powder can be removed by placing a filter between the reactor and the purifier.

The metal silicon powder is a very hard substance, and therefore a filter device may wear away. This has been considered problematic. Patent Literature 1 discloses a trichlorosilane production apparatus including a solid-gas separator provided with a sintered filter element. The sintered filter element is made of a sintered metal which is a wear-resistant material.

### Citation List

### [Patent Literature 1]

Specification of Chinese Utility Model Publication No. 201643908

### Summary

### Technical Problem

However, the inventors of the present invention found, through their own study, that the above conventional technique still has room for improvement in terms of prevention of damage to the filter device.

An aspect of the present invention was made in view of the above issue, and an object thereof is to prevent or reduce corrosion cracking resulting from corrosion and stress (hereinafter referred to as "stress-corrosion cracking") in a trichlorosilane production apparatus.

### Solution to Problem

In order to attain the above object, the inventors of the present invention conducted diligent research, and found that it is possible to prevent or reduce the corrosion of a filter element and occurrence of stress-corrosion cracking in the filter element by employing a corrosion-resistant material as a material for the filter element. Specifically, the present invention includes the following features.

A trichlorosilane production apparatus including: a reactor configured to produce trichlorosilane with use of metal silicon powder; and a filter device configured to remove a reaction residue from a reaction product that is produced by the reactor and that contains the trichlorosilane and the reaction residue, the filter device including a filter element that is comprised of a corrosion-resistant material.

### Advantageous Effects of Invention

An aspect of the present invention makes it possible to prevent or reduce corrosion and stress-corrosion cracking that would be caused by hydrochloric acid that would be formed at or near a filter element.

### Description of Embodiments

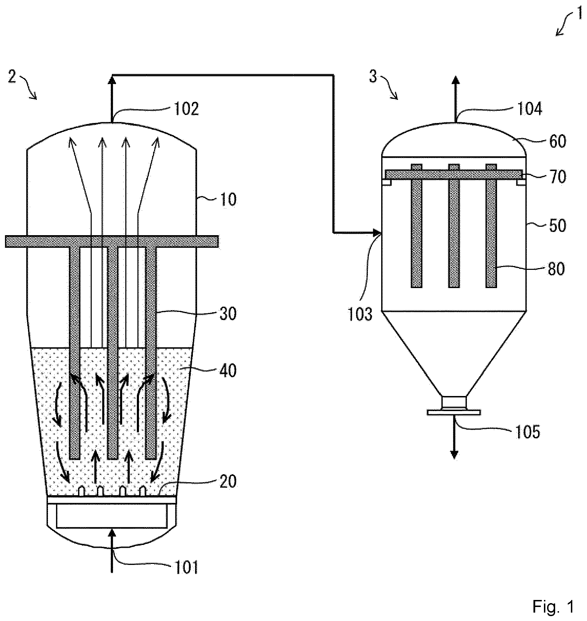

- Fig. 1: schematically illustrates a trichlorosilane production apparatus in accordance with an embodiment of the present invention.

The following description will discuss embodiments of the present invention in detail. Note that any numerical range expressed as "*A* to *B*", in this specification, means "not less than A and not more than B (between A and B inclusive)", unless otherwise specified.

### [1. Overview of the present invention]

The inventors conducted diligent research and found that the foregoing conventional technique has the following issues. The trichlorosilane production apparatus including a sintered metallic filter element disclosed in Patent Literature 1 may encounter the following issues (i) to (iii), in addition to wear that results from contact between metal silicon powder and a filter element of a filter device: (i) when the filter device is opened for regular inspection or the like, a hydrochloric acid environment is formed at or near the filter element due to moisture in the air; (ii) the hydrochloric acid environment accelerates the corrosion of the filter element and, if the filter device continues to operate, the corroded portion is stressed and cracks; and (iii) especially, because the filter element has fine holes, trichlorosilane and tetrachlorosilane are likely to remain within the holes, and, when the filter device is opened for regular inspection or the like, the above issues (i) and (ii) are significant.

With regard to the deterioration of the filter element, those skilled in the art have especially been concerned about wear that would result from contact with the metal silicon powder. It was therefore not expected that stress-corrosion cracking issues would arise from corrosion that would result from opening of the device. The inventors, to their surprise, found through their own study that the corrosion resistance of the filter element is important.

Under such circumstances, a trichlorosilane production apparatus in accordance with an embodiment of the present invention is to solve the above issues accompanying the conventional techniques, and includes a filter element that has corrosion resistance. The following description discusses the trichlorosilane production apparatus in detail.

### [2. Trichlorosilane production apparatus and method of producing trichlorosilane]

A trichlorosilane production apparatus in accordance with an embodiment of the present invention is a trichlorosilane production apparatus that includes: a reactor configured to produce trichlorosilane with use of metal silicon powder; and a filter device configured to remove a reaction residue from a reaction product that is produced by the reactor and that contains the trichlorosilane and the reaction residue, in which the filter device includes a filter element that is comprised of a corrosion-resistant material. A method of producing trichlorosilane in accordance with an embodiment of the present invention includes the step of producing trichlorosilane with use of the above production apparatus.

### <2-1. Reactor>

A reactor for use in an embodiment of the present invention is not limited in any way, and may be a known reactor, provided that the reactor is an apparatus that synthesizes a trichlorosilane-containing reaction product with use of metal silicon powder. The reactor is, for example, a fluidized-bed reactor. The use of a fluidized-bed reactor makes it possible to continuously supply metal silicon powder and hydrogen chloride and thereby continuously synthesize trichlorosilane. In the following description, an apparatus to synthesize trichlorosilane by allowing metal silicon powder and a hydrogen chloride gas to react with each other is employed as an example of the fluidized-bed reactor, as illustrated in Fig. 1. Note, however, that an apparatus to synthesize trichlorosilane by allowing metal silicon powder and tetrachlorosilane to react with each other may alternatively be employed.

A reactor 2, which is included in a trichlorosilane production apparatus 1 illustrated in Fig. 1, includes a reaction vessel 10, a disperser plate 20, and a heat transfer medium pipe 30. The reactor 2 is arranged such that metal silicon powder is supplied into the reaction vessel 10 and that a hydrogen chloride gas, which is to react with the metal silicon powder, is supplied into the reaction vessel 10 through a gas feed opening 101 at the bottom of the reaction vessel 10. The disperser plate 20 is provided within the reaction vessel 10 so as to reside above the gas feed opening 101, and serves to disperse the hydrogen chloride gas supplied into the reaction vessel 10.

The reactor 2 allows the metal silicon powder inside the reaction vessel 10 to react with the hydrogen chloride gas, while allowing the metal silicon powder to flow by the hydrogen chloride gas (an area where this reaction is taking place is hereinafter referred to as "fluid bed 40"). The reaction between the metal silicon powder and the hydrogen chloride gas gives a reaction product that contains trichlorosilane and a reaction residue. The reaction product goes out through a reaction product outlet 102 of the reaction vessel 10. In the inner space of the reaction vessel 10, the heat transfer medium pipe 30, through which a heat transfer medium passes, is provided in parallel to a vertical direction (direction of gravitational force). The heat transfer medium is passed through the heat transfer medium pipe 30, and thereby heat resulting from the reaction between the metal silicon powder and the hydrogen chloride gas is removed.

The shape of the reaction vessel 10 (in other words, the shape of the side wall of the reaction vessel 10) is not particularly limited. For example, a portion, which surrounds the fluid bed 40, of the side wall of the reaction vessel 10 may be (i) shaped such that its cross section perpendicular to the height direction of the reaction vessel 10 is uniform in area (not illustrated) or (ii) may be tapered such that its cross section perpendicular to the height direction of the reaction vessel 10 increases in area in an upward direction (Fig. 1). For example, the side wall may be tapered such that the tapered portion, whose cross section perpendicular to the height direction of the reaction vessel increases in area in the upward direction, occupies at least 80% of the distance from the gas feed opening to the top face of the fluid bed. The shape of the reaction vessel 10 is preferably a tapered shape, because this makes it possible to reduce the risk of erosion and to prevent local temperature increases.

Note that flows of the metal silicon powder and the hydrogen chloride to the reactor 2 are disclosed in, for example, Japanese Patent Application Publication *Tokukai* No. 2011-184242, and therefore are not described here. Also note that, with regard to source materials, any of known materials can be used without any particular limitation. With regard to the conditions under which synthesis is carried out, any of known conditions can be employed without particular limitation.

As used herein, the term "metal silicon powder" refers to a solid substance that contains elemental silicon in metal form, such as metallurgical metal silicon, ferrosilicon, or polysilicon. Any of known such materials may be used without any limitation. These kinds of metal silicon powder may contain some impurity(impurities) such as an iron compound. The constituents and amounts of such impurities are not particularly limited. Usually, the metal silicon powder is used in the form of fine powder having an average particle diameter of about 150 to 350 µm.

The hydrogen chloride for use in the foregoing reaction can be any of various kinds of industrially available hydrogen chloride.

The amount of supply of the metal silicon powder and the hydrogen chloride is not particularly limited, provided that the metal silicon powder and the hydrogen chloride can be supplied at a speed that achieves a flow rate at which a fluid bed can form.

The temperature at which the foregoing reaction is carried out is selected appropriately in consideration of the material and capacity of the reactor, type of catalyst used, and the like. Generally, the temperature at which the reaction is carried out is set to fall within the range of from 200 to 500°C, particularly within the range of from 250 to 400°C.

### <2-2. Filter device>

The filter device is a device to remove a reaction residue, which contains unreacted metal silicon powder, from a reaction product that contains trichlorosilane and the reaction residue. The filter device includes a filter element having pores therein. The filter device, which is configured like above, thereby separates the reaction product into (i) a component that can pass through the pores and (ii) a component that cannot pass through the pores (reaction residue).

An example of the filter device is discussed based on a filter device 3 illustrated in Fig. 1. The filter device 3 includes a lower filter vessel 50, an upper filter vessel 60, a partition plate 70, and filter elements 80.

The lower filter vessel 50 is comprised of a tapered bottom and a barrel portion with uniform diameter, and has a filter device entrance 103 and a residue collection opening 105. The upper filter vessel 60 has a filter device exit 104. The filter device 3 continuously receives, via the filter device entrance 103, the reaction product synthesized in the reactor 2. The received reaction product is separated by the filter element 80, and discharged through the filter device exit 104 and the residue collection opening 105. The lower filter vessel 50 and the upper filter vessel 60 are configured such that the filter device 3 is openable and closable.

The partition plate 70 divides the inner space of the filter device 3 into (i) a space nearer the filter device entrance 103 (such a space is hereinafter referred to as "filter-device-entrance-side space") and (ii) a space nearer the filter device exit 104 (such a space is hereinafter referred to as "filter-device-exit-side space"). For example, the partition plate 70 can be located at the boundary between the lower filter vessel 50 and the upper filter vessel 60. The partition plate 70 has holes for holding the filter elements 80. The shape and size of each hole, the number of holes, and the location of each hole are not limited.

Each of the filter elements 80 is in the shape of a cylinder having fine pores. The filter elements 80 are disposed within the filter device 3 such that the filter elements 80 are held in the holes of the partition plate 70. The filter elements 80 connect between the filter-device-entrance-side space and the filter-device-exit-side space such that these spaces are in gas communication with each other through the pores. The component, which can pass through the pores of the filter elements 80 (hereinafter referred to as "gas component"), of the reaction product received through the filter device entrance 103 is discharged through the filter device exit 104. Because the filter device 3 continuously receives the reaction product, the pressure at the filter device entrance is a positive pressure whereas the pressure at the filter device exit is lower than that positive pressure. This results in spontaneous discharge of the gas component.

On the contrary, a component, which is larger in size than the pore size of the pores of the filter elements 80, of the reaction product cannot pass through the pores of the filter elements 80, and therefore remain in the filter-device-entrance-side space of the filter device 3.

In a case where the removal of the reaction residue from the reaction product is continuously carried out, the reaction residue adheres to the inner walls of the pores of the filter elements 80. This leads to a pressure loss in the filter elements 80. To address this, it is preferable that a reverse cleaning operation is regularly carried out, in which the filter is switched to a spare filter and a gas that does not adversely affect the reaction product (examples of such a gas include N₂ gas, H₂ gas, Ar gas and the like) is forced to flow in a direction from the filter-device-exit-side space to the filter-device-entrance-side space and thereby the reaction product present within the pores of the filter elements 80 is carried back to the filter-device-entrance-side space. Furthermore, the reaction residue accumulates within the filter device 3, and therefore reaction residue removal efficiency may decrease. To address this, it is preferable that the reaction residue is collected regularly through the residue collection opening 105. The collection is carried out preferably by a discharge operation. The discharge operation is carried out in the following manner: the pressure within a filter vessel is raised to a certain level with use of a N₂ gas, H₂ gas, Ar gas, or the like; and thereby the residue is allowed to move into another vessel whose pressure is maintained lower than the pressure within the above filter vessel and which is located downstream of the residue collection opening 105. The discharge operation is preferably carried out by: maintaining the pressures within both vessels at different levels; and then quickly opening a valve of a pipe connecting between the vessels and thereby allowing the residue to be discharged under the pressure difference between the vessels.

Furthermore, for the purpose of checking the conditions of the filter elements 80 or making an inspection of the filter device 3, the filter device 3 is sometimes opened to air by separating the lower filter vessel 50 and the upper filter vessel 60 of the filter device 3. Before opening the filter device 3 to air, the foregoing reverse cleaning operation and the discharge operation are carried out to cause the reaction product, remaining within the pores of the filter elements 80, to come off and be discharged. However, because the pores are very small pores, some reaction product remains within the pores. The reaction product remaining within the pores contains trichlorosilane and the like. Therefore, when the filter device 3 is opened to air, moisture in the air and the reaction product react to produce high-concentration hydrochloric acid at or near the filter elements 80. This makes the filter elements 80 readily corrode.

To address this, the filter elements 80 are comprised of a corrosion-resistant material. As used herein, the term "corrosion-resistant material" refers to a material that has been verified by JIS G0576 "stress corrosion cracking test for stainless steels", JIS Z 2291 "method for high-temperature gaseous corrosion test of metallic materials", or the like method to be less prone to stress-corrosion cracking than stainless steel or to be very highly resistant to oxidation at high temperature. As used herein, the scope of the meaning of the phrase "(a member is) comprised of a corrosion-resistant material" includes, for example, (i) the member coated with a corrosion-resistant material and (ii) the member produced from a corrosion-resistant material by forging or casting.

The corrosion-resistant material for use in the filter elements 80 essentially contains nickel, and preferably further contains at least one selected from the group consisting of chromium, iron, tungsten, niobium, tantalum, and molybdenum. The amount of nickel in 100 wt.% of the corrosion-resistant material is preferably 20 to 80 wt.%, more preferably 50 to 75 wt.%. The amount of chromium is preferably 10 to 25 wt.%, more preferably 14 to 23 wt.%. The amount of iron is preferably 2 to 30 wt.%, more preferably 3 to 8 wt.%. The amount of tungsten is preferably 0 to 5 wt.%, more preferably 0 to 4 wt.%. The amount of niobium is preferably 0 to 5 wt.%, more preferably 0 to 4 wt.%. The amount of tantalum is preferably 0 to 5 wt.%, more preferably 0 to 4 wt.%. The amount of molybdenum is preferably not less than 1 wt.%, more preferably 5 to 20 wt.%. Specific examples of such a corrosion-resistant material include Inconel 600, Inconel 625, Inconel 825, Hastelloy C22, Hastelloy C276, and NAS254N.

Among those listed above, in a case where a corrosion-resistant material containing molybdenum is employed as a material for the filter elements 80, it is possible to prevent or reduce not only corrosion and stress-corrosion cracking but also intergranular corrosion (in which corrosion proceeds along the boundaries of crystallites). Therefore, employment of a corrosion-resistant material containing molybdenum is more preferred. Examples of a corrosion-resistant material containing molybdenum include Inconel 625, Inconel 825, Hastelloy C22, Hastelloy C276, and NAS254N.

The present invention is not limited to the embodiments, but can be altered by a skilled person in the art within the scope of the claims. The present invention also encompasses, in its technical scope, any embodiment derived by combining technical means disclosed in differing embodiments.

### Examples

The following description will discuss a method of the present invention in more detail based on Examples. Note, however, that the present invention is not limited to such Examples.

A reaction product discharged from a trichlorosilane production apparatus 1 illustrated in Fig. 1 was processed with use of a filter device 3 illustrated in Fig. 1.

The reaction product contains the following gas composition and the following dust component, at a temperature of about 200°C.
Gas composition: 3 wt.% H₂, 17 wt.% TCS, 80 wt.% STC, and trace components (AlCl₃, high-boiling component etc.)
Dust component: Si, metal-silicon intermetallic compound, SiC, Al, Ca slag, AlCl₃, CaCl₂, FeCI2, etc.

Table 1 shows the material of each filter element 80, evaluations of the corrosion resistance of the material, and presence/absence of stress-corrosion cracking after actual operation. Table 2 shows the kinds and amounts of constituents of materials used as the filter elements 80.

Each filter element 80 used here was a filter element in the shape of a cylinder (3 mm in wall thickness, 60ϕ in outer diameter x 1300 mm in total length) having fine pores, made of one of the materials No. 1 to No. 5. Such filter elements had been used in actual operation for 309 days, and whether or not there was stress-corrosion cracking was checked.

The stress-corrosion cracking occurred only in SUS316L, which did not show corrosion resistance in both test methods of JIS G0576 and JIS Z2291.

Of the filter elements which did not undergo stress-corrosion cracking, the filter elements made of the materials No. 4 and No. 5 were used in actual operation for another three years. As a result, no stress-corrosion cracking occurred.

**[Table 1]**

| No. | Material of filter element | JIS G 0576 | JIS Z 2291 | Stress-corrosion cracking |
|---|---|---|---|---|
| 1 | SUS316L | - | - | Cracking occurred |
| 2 | NAS254N | corrosion-resistant material | corrosion-resistant material | No cracking |
| 3 | Inconel 825 | corrosion-resistant material | corrosion-resistant material | No cracking |
| 4 | Inconel 625 | corrosion-resistant material | corrosion-resistant material | No cracking |
| 5 | Hastelloy C-276 | corrosion-resistant material | corrosion-resistant material | No cracking |

**[Table 2]**

| | C | Si | Mn | P | S | Ni | Cr | Mo | Cu | Fe |
|---|---|---|---|---|---|---|---|---|---|---|
| SUS316L | 0.014 | 0.70 | 1.24 | 0.034 | 0.002 | 12.10 | 17.22 | 2.04 | - | balance |
| NAS254N | 0.01 | 0.46 | 0.35 | 0.017 | 0.001 | 24.94 | 22.98 | 5.74 | 0.08 | balance |
| Inconel825 | 0.04 | 0.26 | 0.46 | - | 0.001 | 42.45 | 22.68 | 2.71 | 1.87 | 28.60 |
| Inconel625 | 0.01 | 0.11 | 0.07 | 0.008 | <0.001 | 60.64 | 21.98 | 9.03 | - | 4.20 |
| HastelloyC-276 | <0.01 | 0.05 | 0.49 | 0.011 | 0.001 | 56.47 | 15.93 | 16.01 | - | 5.83 |

Note that the numbers in Table 2 are in wt.%.

### (Conclusion)

It was confirmed that, by employing a corrosion-resistant material as a material for the filter elements 80, it is possible to prevent or reduce the corrosion of the filter elements and the occurrence of stress-corrosion cracking in the filter elements.

A trichlorosilane production apparatus in accordance with an aspect of the present invention includes: a reactor configured to produce trichlorosilane with use of metal silicon powder; and a filter device configured to remove a reaction residue from a reaction product that is produced by the reactor and that contains the trichlorosilane and the reaction residue, the filter device including a filter element that is comprised of a corrosion-resistant material.

A trichlorosilane production in accordance with another aspect of the present invention is preferably arranged such that the corrosion-resistant material contains molybdenum in an amount of not less than 1 wt.%.

A trichlorosilane production in accordance with a further aspect of the present invention is preferably arranged such that the corrosion-resistant material is Inconel 625 or a Hastelloy.

A method of producing trichlorosilane in accordance with still a further aspect of the present invention preferably includes the step of producing trichlorosilane with use of any one of the trichlorosilane production apparatuses in accordance with the above aspects.

### Industrial Applicability

The present invention is applicable to production of trichlorosilane.

### Reference Signs List

- 1: trichlorosilane production apparatus
- 2: reactor
- 3: filter device
- 10: reaction vessel
- 20: disperser plate
- 30: heat transfer medium pipe
- 40: fluid bed
- 50: lower filter vessel
- 60: upper filter vessel
- 70: partition plate
- 80: filter element
- 101: gas feed opening
- 102: reaction product outlet
- 103: filter device entrance
- 104: filter device exit
- 105: residue collection opening

## Claims

1. A trichlorosilane production apparatus comprising:
a reactor configured to produce trichlorosilane with use of metal silicon powder; and
a filter device configured to remove a reaction residue from a reaction product that is produced by the reactor and that contains the trichlorosilane and the reaction residue,
the filter device including a filter element that is comprised of a corrosion-resistant material.

2. The trichlorosilane production apparatus as set forth in claim 1, wherein the corrosion-resistant material contains molybdenum in an amount of not less than 1 wt.%.

3. The trichlorosilane production apparatus as set forth in claim 1 or 2, wherein the corrosion-resistant material is Inconel 625 or a Hastelloy.

4. A method of producing trichlorosilane, comprising the step of producing trichlorosilane with use of a trichlorosilane production apparatus recited in any one of claims 1 to 3.

## Amended claims

### Amended claims under Art. 19.1 PCT

1. A trichlorosilane production apparatus comprising:
a reactor configured to produce trichlorosilane with use of metal silicon powder; and
a filter device configured to remove a reaction residue from a reaction product that is produced by the reactor and that contains the trichlorosilane and the reaction residue,
the filter device including a filter element that is comprised of a corrosion-resistant material,
the corrosion-resistant material containing molybdenum in an amount of not less than 1 wt.%.

2. The trichlorosilane production apparatus as set forth in claim 1, wherein the corrosion-resistant material is Inconel 625 or a Hastelloy.

3. A method of producing trichlorosilane, comprising the step of producing trichlorosilane with use of a trichlorosilane production apparatus recited in claim 1 or 3.
